(19) Europäisches Patentamt
European Patent Office
Office européen des brevets

(11) Veröffentlichungsnummer: **0 469 435 B1**

(12) # EUROPÄISCHE PATENTSCHRIFT

(45) Veröffentlichungstag der Patentschrift: **25.01.95**

(51) Int. Cl.$^6$: **C08G 69/34**

(21) Anmeldenummer: **91112307.3**

(22) Anmeldetag: **23.07.91**

Die Akte enthält technische Angaben, die nach dem Eingang der Anmeldung eingereicht wurden und die nicht in dieser Patentschrift enthalten sind.

(54) **Copolyamide, Verfahren zu ihrer Herstellung und ihre Verwendung.**

(30) Priorität: **27.07.90 DE 4023968**

(43) Veröffentlichungstag der Anmeldung:
**05.02.92 Patentblatt 92/06**

(45) Bekanntmachung des Hinweises auf die Patenterteilung:
**25.01.95 Patentblatt 95/04**

(84) Benannte Vertragsstaaten:
**CH DE FR GB IT LI NL**

(56) Entgegenhaltungen:
**DE-A- 1 645 408**
**DE-A- 1 720 832**
**US-A- 3 717 598**

(73) Patentinhaber: **EMS-INVENTA AG**
**Selnaustrasse 16**
**CH-8001 Zürich (CH)**

(72) Erfinder: **Thullen, Helmut, Dipl.-Chem.**
**Via Caschners 27**
**CH-7402 Bonaduz (CH)**
Erfinder: **Schmid, Eduard, Dr. sc. Nat.**
**Valbeuna**
**CH-7402 Bonaduz (CH)**

**EP 0 469 435 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Copolyamide, die sich zur Herstellung von Formkörpern mit hoher Glasumwandlungstemperatur, Steifigkeit und Schlagzähigkeit bei geringer Feuchtigkeitsaufnahme auszeichnen, ein Verfahren zur Herstellung dieser Copolyamide wie ihre Verwendung zur Herstellung von Formkörpern.

Thermoplastisch verarbeitbare Polyamide lassen sich in semikristalline sowie amorphe Homo- und Copolyamide unterteilen.

Die semikristallinen Polyamide bilden eine wesentliche Gruppe der technischen Thermoplasten. Aus ihnen hergestellte Formkörper zeichnen sich durch hohe Festigkeit, Steifigkeit, Zähigkeit und Oberflächenhärte, durch ein gutes Abriebverhalten sowie ausgezeichnete Chemikalien- und Spannungskorrosionsbeständigkeit aus. Die Einsatzfähigkeit dieser semikristallinen Homo- und Copolyamide, wie beispielsweise der hochschmelzenden Homopolyamide PA 6 und PA 6.6, wird jedoch durch ihre Neigung zur Wasseraufnahme und die damit verbundene Herabsetzung der Glasumwandlungstemperatur, die eine Verringerung der Steifigkeit und Festigkeit bedingt, wesentlich beeinflußt.

Steife amorphe Copolyamide werden im allgemeinen aus aromatischen Dicarbonsäuren und Diaminen mit kristallisationshemmender Struktur hergestellt, wobei sie weiter Comonomere, wie Aminosäuren, Lactame und Salze aus Diaminen und Dicarbonsäuren enthalten können. Durch die Auswahl der jeweils eingesetzten Monomeren können die Eigenschaften derartiger Copolyamide in weiten Bereichen gezielt variiert werden.

Wie bereits erwähnt, fällt die Glasumwandlungstemperatur durch Feuchtigkeitsaufnahme ab, wodurch sich wiederum die Einsatztemperaturen erniedrigen. Werden steife amorphe Copolyamide beispielsweise in kochendem Wasser eingesetzt, so ist ein Abfall der Glasumwandlungstemperatur ($T_G$) von bis zu etwa 100 °C möglich, was die Einsatzfähigkeit von aus diesen Polymeren hergestellten Gebrauchsgegenständen erheblich einschränkt, weil sie zum Teil ihre Form vollständig verlieren.

Amorphe Copolyamide werden beispielsweise in den folgenden Patentschriften beschrieben: GB 619,707, CH 449,256, US 2,494,563, US 3,842,045, US 3,840,501, JP 72/11,502, US 2,969,482, US 3,587,400, DE 21 59 803 und CH 624,970.

Es ist auch bekannt, zur Herstellung von Polyamiden und Copolyamiden polymere, insbesondere dimerisierte Fettsäuren, einzusetzen. Diese Materialien werden beispielsweise in der Kleb- und Schmierstoffpolymerchemie eingesetzt. Die Struktur und die Eigenschaften von dimerisierten Fettsäuren werden beispielsweise ausführlich in der Firmenschrift der Firma Henkel-Emery/Gouda (NL) unter dem Titel "Empol Dimer- and Polymer Acids, Technical Bulletin 114" beschrieben. Diese dimerisierten Fettsäuren werden durch eine spezifische Polymerisationsreaktion aus monomeren ungesättigten Fettsäuren mit meistens 18 Kohlenstoffatomen gewonnen. Es gibt viele Produkte mit unterschiedlichem Verhältnis der monofunktionellen, difunktionellen, trifunktionellen und polyfunktionellen Säuren. Zur Herstellung von thermoplastischen Polyamiden werden Typen mit hohem Dimeranteil, beispielsweise 90% und insbesondere 97%, bevorzugt.

Dimerisierte Fettsäuren können ferner in Polyamiden für Oberflächenbeschichtungen und Kleber verwendet werden (vergleiche die US 3,231,545). Alkohollösliche Hilfsstoffe für Druckschwärzen beschreiben die BE 804 604 und die GB 1 129 195. In der US 3 717 598 werden Copolyamide aus Diaminen des sogenannten Dicycantyps, d.h. aus 4,4'-Diaminodicyclohexylmethan oder seinen Derivaten, dimerisierter Fettsäure und einer linearen Dicarbonsäure mit 6 bis 10 Kohlenstoffatomen beschrieben. Diese Produkte besitzen eine tiefe Glasumwandlungstemperatur und einen niederen E-Modul und sind daher für viele technische Einsatzzwecke ungeeignet.

In der DE-A 1 720 832 werden Polyamide auf der Basis von cycloaliphatischen Diaminen, wie beispielsweise 3,3'-Dimethyl-4,4'-diamino-dicyclohexylmethan, dimerisierter Fettsäure, die durch weitere aliphatische Dicarbonsäuren, darunter auch durch cycloaliphatische oder durch aromatische Dicarbonsäuren ersetzt sein kann, sowie weiteren Monomeren, wie Aminocarbonsäuren und Lactamen, beschrieben. Der auf die Carboxylgruppen bezogene Molanteil der dimerisierten Fettsäure muss dabei mindestens 25% betragen. Konkret werden nur Beispiele beschrieben, in denen aliphatische Dicarbonsäuren verwendet werden. Diese Produkte werden als zähe Kunststoffe von hoher Zerreißfestigkeit und Dehnung beschrieben, die als Formpulver, Klebstoffe sowie in Form von Filmen oder Folien Anwendung finden.

Für viele technische Anwendungszwecke werden thermoplastisch verarbeitbare Kunststoffe mit hoher Steifigkeit und Festigkeit gefordert, die diese Eigenschaften bei der Einwirkung von Feuchtigkeit, beispielsweise hoher Luftfeuchtigkeit, oder beim Kontakt mit Wasser, insbesondere mit kochendem Wasser, beibehalten. Die Feuchtigkeitsaufnahme soll dabei so gering sein, dass die Glasumwandlungstemperatur wenig beeinflußt bleibt, d.h. durch Feuchtigkeitsaufnahme wenig herabgesetzt wird.

Der Erfindung liegt die Aufgabe zugrunde, steife Copolyamide mit einer hohen Glasumwandlungstemperatur und mit hoher Festigkeit, Steifigkeit und Wärmeformbeständigkeit zu schaffen, wobei die Glasumwandlungstemperatur durch Feuchtigkeitsaufnahme nur unwesentlich beeinträchtigt werden soll.

Diese Aufgabe wird durch die amorphen Copolyamide gemäss Patentanspruch 1 gelöst. Die Ansprüche 10 und 11 beinhalten ein Verfahren zur Herstellung beziehungsweise die Verwendung dieser amorphen Copolyamide.

Die Erfindung beruht demgemäss auf der überraschenden Erkenntnis, dass amorphe Copolyamide aus

a) 50 Mol-% wenigstens eines cycloaliphatischen Diamins der Formel I,

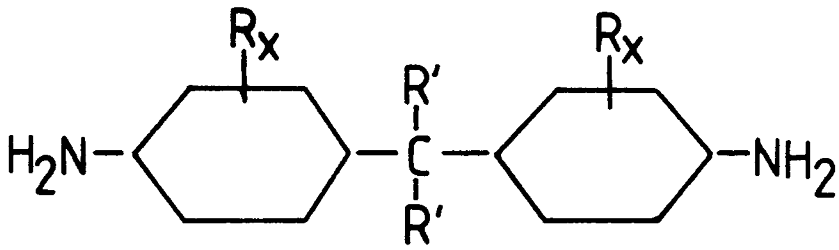 I

worin R für einen Alkylrest mit 1 bis 10 Kohlenstoffatomen steht, R' Wasserstoff oder einen Alkylrest mit 1 bis 4 Kohlenstoffatomen bedeutet und x 0 bis 4 ist,

b) 5 bis 12 Mol-% einer dimerisierten Fettsäure,

c) 38 bis 45 Mol-% mindestens einer aromatischen Dicarbonsäure

wobei sich die Molsumme der Komponenten a) bis c) zu 100% ergänzt, und wahlweise

d) 0 bis 50 Gew.-% bezogen auf die Summe a) + b) + c) weiteren polyamidbildendem Monomeren,

sich dadurch auszeichnen, dass sie eine geringe Wasseraufnahme und dadurch nur eine geringe Änderung der Glasumwandlungstemperatur zeigen, so dass aus ihnen hergestellte Formkörper eine hohe Festigkeit, Steifigkeit und Wärmeformbeständigkeit besitzen, wobei diese Eigenschaften auch dann beibehalten werden, wenn diese Formkörper der Einwirkung von Feuchtigkeit bei hohen Temperaturen ausgesetzt werden, beispielsweise der Einwirkung von kochendem Wasser.

Als cycloaliphatische Diamine werden vorzugsweise solche verwendet, bei denen in der allgemeinen Formel I R für einen Alkylrest mit 1 bis 4 Kohlenstoffatomen steht. Beispiele für erfindungsgemäß einsetzbare cycloaliphatische Diamine sind Dialkyl-4,4'-diamino-dicyclohexylalkane.

Besonders bevorzugt werden 3,3'-Dimethyl-4,4'-diaminodicyclohexylmethan (nachfolgend als "Diamin" bezeichnet) und 4,4'-Diaminodicyclohexylalkane, wie beispielsweise 4,4'-Diaminodicyclohexylmethan oder -propan, verwendet.

Als dimerisierte Fettsäuren b), die in den erfindungsgemäßen amorphen Copolymeren eingesetzt werden, kommen insbesondere diejenigen in Frage, die in der weiter oben erwähnten Firmenschrift der Firma Henkel-Emery/Gouda (NL) beschrieben werden, d.h. solche, die auf ungesättigte Fettsäuren zurückgehen, welche meistens 18 Kohlenstoffatome enthalten. Vorzugsweise werden erfindungsgemäß solche dimerisierte Fettsäuren eingesetzt, die einen Dimeranteil von mindestens 90 Gew.-% und in besonders bevorzugter Weise von mindestens 97 Gew.-% besitzen. Bevorzugt werden solche dimerisierten Fettsäuren, die hydriert und destilliert worden sind und damit eine helle Eigenfarbe besitzen.

Als aromatische Dicarbonsäuren c), die zum Einsatz in den erfindungsgemäßen amorphen Copolyamiden gelangen, werden vorzugsweise ein- oder mehrkernige, gegebenenfalls substituierte, aromatische Dicarbonsäuren, wie beispielsweise Isophthalsäure, Terephthalsäure, Naphthalindicarbonsäure, Tert.-butylisophthalsäure oder 1,1,3-Trimethyl-3-phenylindan-4',5-dicarbonsäure oder ihre Gemische verwendet. Besonders bevorzugt werden Isophthalsäure und Terephthalsäure oder ein Gemisch dieser Säuren, das vorzugsweise mindestens 25 Mol-% Isophthalsäure enthält.

Als polyamidbildende Monomere d), die in den erfindungsgemäßen amorphen Copolyamiden eingesetzt werden können, kommen in der Polyamidherstellung übliche Monomere in Frage, wie aliphatische Dicarbonsäuren mit 6 bis 20 Kohlenstoffatomen, aliphatische Diamine mit 2 bis 20 Kohlenstoffatomen und/oder aromatisch-aliphatische Diamine mit 6 bis 12 Kohlenstoffatomen, wie beispielsweise m-Xylidendiamin oder p-Xylidendiamin. Ferner kann man Aminosäuren und Lactame mit 4 bis 14 Kohlenstoffatomen einsetzen.

Ganz besonders bevorzugte erfindungsgemäße Copolyamide sind solche, die aus Aminen des Dicycantyps sowie dimerisierten Fettsäuren in einem auf die Carboxylgruppen bezogenen Molanteil von maximal 24% und aromatischen Dicarbonsäuren bestehen, insbesondere aus Isophthalsäure als Hauptkomponente des aromatischen Säureanteils.

Die erfindungsgemäßen amorphen Copolyamide sind steif und transparent und zeigen eine hohe Glasumwandlungstemperatur, die zwischen 115 °C und 210 °C liegt, wobei die Glasumwandlungstemperatur aufgrund der geringen Feuchtigkeitsaufnahme während des Gebrauchs im Gegensatz zu den amorphen Copolyamiden nach dem Stand der Technik nur wenig absinkt. Die Glasumwandlungstemperatur kann durch das Verhältnis von dimerisierter Fettsäure zu aromatischer Dicarbonsäure eingestellt werden. Wird beispielsweise das erfindungsgemäße Copolyamid aus "Diamin" mit dimerisierter Fettsäure mit einem Dimeranteil von mindestens 90 Gew.-% sowie Isophthalsäure hergestellt, so liegt die Glasumwandlungstemperatur bei einem Dimersäureanteil von 25 Mol-% bei 115 °C, bei einem Dimersäureanteil von 11,5 Mol-% bei 181 °C sowie bei einem Dimersäureanteil von nur 6 Mol-% bei ca. 205 °C.

Wie bereits erwähnt, besteht die herausragende Eigenschaft der erfindungsgemäßen amorphen Copolyamide in der geringen Feuchtigkeitsaufnahme insbesondere unter extremen Bedingungen, beispielsweise bei der Einwirkung von kochendem Wasser, wobei die Glasumwandlungstemperatur nur wenig absinkt und damit auch die Formstabilität, Transparenz und Steifigkeit weitgehend erhalten bleiben. Damit werden für die erfindungsgemäßen Copolyamide Anwendungsbereiche erschlossen, für die bisher weder Copolyamide noch Polyamide eingesetzt werden konnten.

Beispielsweise nimmt ein Copolyamid aus 50 Mol-% "Diamin", 15 Mol-% dimerisierter Fettsäure und 35 Mol-% Isophthalsäure beim Konditionieren bei Raumtemperatur und einer relativen Feuchtigkeit von 50% nur 0,7 Gew.-% Wasser auf, wobei die Glasumwandlungstemperatur von 158 °C auf 151,5 °C absinkt. Selbst nach einer sechstägigen Lagerung in kochendem Wasser beträgt der Feuchtigkeitsgehalt nur 3,1%. Die Glasumwandlungstemperatur sinkt in diesem Falle auf 128 °C ab.

Die erfindungsgemäßen Copolyamide sind bis zu hohen Molekulargewichten kondensierbar und lassen sich leicht aus dem zu ihrer Herstellung eingesetzten Autoklaven austragen. Falls kein Lactam als zusätzliches Monomeres verwendet wird, besitzen sie auch nur sehr geringe Restextraktmengen. Eine Kettenlängenregelung ist leicht möglich durch gezielte Zugabe von beispielsweise monofunktionell wirkenden Verbindungen, wie beispielsweise von Monocarbonsäuren, wie Benzoesäure oder Essigsäure, oder von Monoaminen wie Cyclohexylamin oder Isotridecylamin.

Ferner können die erfindungsgemäßen Copolyamide unter Einsatz üblicher Polyamidmodifizierungsmittel modifiziert und den jeweiligen Einsatzzwecken angepaßt werden. Als Hitzestabilisatoren können beispielsweise sterisch gehinderte Phenole eingesetzt werden, desgleichen Phosphite oder auch Hitzestabilisatoren des Kupfer-Halogentyps. Ferner können den erindungsgemäßen Copolyamiden auch Lichtstabilisatoren, beispielsweise gehinderte Amine oder Oxazolinderivate oder Kombinationen von Hitze- und Lichtstabilisatoren, zugesetzt werden. Eine Einfärbung unter Einsatz löslicher organischer Farbstoffe oder Pigmente ist möglich. Die Bewitterungsstabilität kann beispielsweise durch den Zusatz von Ruß, gegebenenfalls in Kombination mit Phenol oder einem Kupferhalogenstabilisierungsmittel, verbessert werden.

Ferner können die erfindungsgemässen Copolyamide neben der erwähnten Schlagzähmodifizierung auch durch Mineralfasern, Glasfasern oder durch Einsatz anderer anorganischer oder organischer Fasern verstärkt werden, ferner können sie durch Einsatz von Halogenverbindungen, rotem Phosphor oder wasserabspaltenden Materialien, wie Magnesiumhydroxid, flammenwidrig eingestellt werden. Auch ist eine Elastomerzugabe zur Schlagzähigkeitserhöhung in Kombination mit dem Zusatz eines Antiflammittels, beispielsweise des Halogentyps, möglich.

Die erfindungsgemäßen Copolyamide lassen sich, vorzugsweise nach Spritzgußverfahren, leicht zur Herstellung von Formteilen verwenden, die sich durch hohe Steifigkeit und Schlagzähigkeit, durch hohe Glasumwandlungstemperatur und geringe Feuchtigkeitsaufnahme auszeichnen, insbesondere für Formteile mit dünner Wandstärke, ferner können sie durch Extrusion zu steifen Rohren oder Ummantelungen von beispielsweise Lichtwellenleitern verarbeiten werden. Im Folienbereich können sie in Kombination mit anderen Polymeren beispielsweise durch Coextrusionsverfahren verarbeitet werden.

Die folgenden Beispiele erläutern die Erfindung.

Zunächst werden die Herstellung der erfindungsgemäßen Copolyamide und die Bestimmung ihrer Eigenschaften beispielhaft beschrieben. Es wurden folgende Messungen durchgeführt:

1. Schlag- und Kerbschlagmessungen nach Charpy, trocken und konditioniert
DIN 53453
2. Streckspannung, Dehnung bei Streckspannung, Reißfestigkeit, Reißdehnung
trocken und konditioniert
DIN 53455
3. Zug-E-Modul
trocken und konditioniert
DIN 53457
Prüfgerät für Zugsversuche:

Zug-Dehnungsgerät: "Zwick 1445"
Hersteller: Fa. Zwick, Ulm, BRD

4. Wasseraufnahme
- bei 50% rel. Luftfeuchte
- bei 100% rel. Luftfeuchte

5. DSC-Messungen:
Messungen an Material
- nach 6 Tagen Lagerung in Wasser bei 95°C
- nach Erreichung des Gleichgewichtswassergehalts bei 50% rel. Luftfeuchte
- nach Erreichung des Gleichgewichtswassergehalts bei 100% rel. Luftfeuchte

Die DSC-Messungen wurden mit folgendem Gerät durchgeführt:
Typ : 1091 B "Thermal Analyzer"
Hersteller : Du Pont

Die Proben wurden mit 20°C/Min aufgeheizt.

Um Glasumwandlungstemperaturen in feuchtem Zustand reproduzierbar bestimmen zu können, wurden die Proben in Spezialpfännchen aus Stahl eingefüllt und dicht verschlossen.

Spezialpfännchen
Typ : "Large Volume Capsules"
Hersteller : Perkin Elmer

6. Relative Viskosität als 0,5%-ige Lösung im m-Kresol nach DIN 53727

Die erindungsgemäßen Copolyamide können in für die Polyamidherstellung üblichen Autoklaven hergestellt werden. Die Aufbereitung der erhaltenen Reaktionsmischung kann getrennt in einem sogenannten Lösegefäß oder direkt im Autoklaven erfolgen. Ist ein Schmelzeaufbereitungs- oder Lösegefäß vorgeschaltet, so wird dort bevorzugt die Neutralisationsreaktion, d.h. die Salzbildung, unter Zusatz der dazu nötigen Menge Wasser durchgeführt. Dabei entsteht Wärme und bei geschlossenem Gefäß ein Druckaufbau. Bei Bedarf kann zusätzlich unter Rühren und Wärmezufuhr soweit erhitzt werden, daß eine homogene, gut rührbare Mischung entsteht. Dabei sollte die Temperatur von 106°C bis 180°C, bei der die Kondensationsreaktion einsetzt, nicht überschritten werden.

Die Schmelzeaufbereitung und die Kondensation erfolgen im Autoklaven unter Inertgasatmosphäre, insbesondere unter Überleiten von Stickstoff; auch Wasserdampf kann z.B. während der Druckphase ganz oder teilweise die Inertgasatmosphäre bilden.

Die Polykondensationsreaktion wird bevorzugt unter Einhaltung einer Druckphase eingeleitet. Diese reduziert den unerwünschten Verlust an flüchtigen Monomerbestandteilen in der Anfangsstufe des Polymeraufbaues. Während der Druckphase kann die Schmelze langsam aufgeheizt werden. Im allgemeinen wird langsam und stufenweise entspannt. Beim Erreichen von Atmosphärendruck wird kontinuierlich Stickstoff über die Schmelze geleitet, wobei gleichzeitig die Kondensationsreaktion abläuft, die zusätzlich durch Anlegen von Vakuum gefördert werden kann.

Während der Druck- und der anschließenden Entgasungsphasen wird die Schmelze kontinuierlich gerührt.

Für die Druckphase wird eine Temperatur von ca. 200°C bis 280°C, bei gleichzeitigem Druckaufbau von 2 bis 30 bar, für die Entgasungs- und Polymendensationsphase von ca. 240°C bis 320°C eingehalten und damit ein Polymeres angestrebt, dessen Summe aller Endgruppen unter 300 µÄq/g Polymer liegt.

Beispiele

| | Diamin | Mol % | dimerisierte Fettesäure | Mol % | aromatische Dicarbonsäure | Mol % |
|---|---|---|---|---|---|---|
| Vergleichsbeispiel Nr. 1 | "Diamin" | 50 | "Dimersäure 1" | 15,0 | IPS | 35,0 |
| Vergleichsbeispiel Nr. 2 | "Diamin" | 50 | "Dimersäure 2" | 15,0 | IPS | 17,5/ TPS 17,5 |
| Beispiel Nr. 3 | "Diamin" | 50 | "Dimersäure 1" | 11,5 | IPS | 38,5 |
| Beispiel Nr. 4 | "Diamin" | 50 | "Dimersäure 2" | 6,2 | IPS | 43,8 |

Vergleichsbeispiele:

| | |
|---|---|
| Nr. 5 | amorphes Copolyamid auf Basis "Diamin" und "Dimersäure 1", entspricht Beispiel Nr. 6 aus DE 17 20 832.0. Zusammensetzung: 50 Mol % "Diamin", 17 Mol % "Dimersäure 2" und 33 Mol % Sebazinsäure |
| Nr. 6 | Copolyamid auf Basis "Diamin" und "Dimersäure 1", entspricht Beispiel Nr. 7 aus DE 17 20 832. Zusammensetzung: 50 Mol % "Diamin", 32 Mol % "Dimersäure 2" und 18 Mol % Dodecandinsäure Nr. 7 |
| Nr. 7 | Vergleichsbeispiel zu Nr. 6. Ersatz der Dodecandinsäure durch Isophtalsäure |
| Nr. 8 | Copolyamid auf Basis "Diamin" und "Dimersäure 1", entspricht Beispiel Nr. 8 aus DE 17 20 832. Zusammensetzung: 50 Mol % "Diamin", 18 Mol % "Dimersäure 2" und 32 Mol % Dodecandinsäure |
| Nr. 9 | Vergleichsbeispiel zu Nr. 8. Ersatz der Dodecandinsäure durch Isophtalsäure |

Erläuterung der Bezeichnungen:

"Diamin" = 3,3'-Dimethyl-4,4'-diaminodicyclohexylmethan
"Dimersäure 1" = Gemisch dimerisierter Fettsäuren mit Gehalt an:

| | |
|---|---|
| Monomer | < 0,1 % |
| Dimer | > 98,0 % |
| Trimer | < 1,0 % |
| sonstige | < 1,0 % |
| (Pripol 1009/Unichema Internat.) | |

"Dimersäure 2" = Gemisch dimerisierter Fettsäuren mit Gehalt an:

| | |
|---|---|
| Monomer ca. | 4,0 % |
| Dimer ca. | 91,0 % |
| Trimer ca. | 5,0 % |
| (Empol 1014/Henkel-Emery) | |

IPS = Isophthalsäure
TPS = Terephthalsäure

Im einzelnen wurden die Beispiele wie folgt durchgeführt:

Vergleichsbeispiel 1:

In den Löser eines 130 l Autoklaven wurden folgende Edukte und Zusätze gegeben:
20,950 kg (87,88 Mol) "Diamin"
14,690 kg (25,64 Mol) "Dimersäure 1"
Mg 573,4
9,995 kg (60,16 Mol) Isophthalsäure
5,0 kg Wasser
0,020 kg Antischaummittel
Verhältnis Amin/Säure: 1 : 1,024 (einschließlich Kettenlängenregler)

Nach dem Lösen der Edukte und beendigter Neutralisationsreaktion wurde das Reaktionsgemisch in den Autoklaven eingebracht. Während der 2-stündigen Druckphase wurde die Mischung auf 240 °C erhitzt und der Druck von 10 auf 2 bar reduziert. Anschließend wurde langsam entspannt. In der 5-stündigen Entgasungsphase wurde die Reaktionstemperatur auf 295 °C gesteigert. Das Polymerisat wurde als Strang abgezogen und granuliert.

Ergebnis:

| | |
|---|---|
| relative Lösungsviskosität: | 1,430 |
| $NH_2$-Endgruppen: | 83 µMol/g |
| COOH-Endgruppen: | 16 µMol/g |
| Schmelzviskosität (122,6 N/270 °C): | 4336 PA's |
| Glasübergangstemperatur: | 158 °C |

Vergleichsbeispiel 2:

In den Löser eines 32 l Autoklaven wurden folgende Edukte und Zusätze gegeben:
3,160 kg (13,26 Mol) "Diamin"
0,780 kg ( 4,70 Mol) Isophthalsäure
0,770 kg ( 4,63 Mol) Terephtalsäure
2,300 kg ( 4,01 Mol) "Dimersäure 2"
0,022 kg ( 0,14 Mol) 1-Amino-3-cyclohexyl-aminopropan
0,017 kg ( 0,10 Mol) Benzoesäure
0,5 kg Wasser
0,005 kg Antischaummittel
Totales Verhältnis Amin/Säure: 1 : 1 (einschließlich Kettenlängenregler)
Das Gemisch wurde im Autoklaven während der 2-stündigen Druckphase bei 15 bar auf 240 °C erhitzt. Nach dem Entspannen wurde die Temperatur während der 3-stündigen Entgasungsphase von 250 °C auf 290 °C erhöht. Das Polymerisat wurde als Strang abgezogen und granuliert.

Ergebnis:

| | |
|---|---|
| relative Lösungsviskosität: | 1,365 |
| $NH_2$-Endgruppen: | 29 µMol/g |
| COOH-Endgruppen: | 117 µMol/g |
| Schmelzviskosität (122,6 N/270 °C): | 603 PA's |
| Glasübergangstemperatur: | 160 °C |

Beispiel 3:

In den Löser eines 20 l Autoklaven wurden folgende Edukte und Zusätze gegeben:
2,940 kg (12,33 Mol) "Diamin"
1,590 kg ( 2,77 Mol) "Dimersäure 1"
1,550 kg ( 9,33 Mol) Isophthalsäure
0,030 kg ( 0,15 Mol) Tridecylamin
0,5 kg Wasser
0,005 kg Antischaummittel
Totales Verhältnis Amin/Säure: 1 : 1,013 (einschließlich Kettenlängenregler)
Das Gemisch wurde im Autoklaven während der 2-stündigen Druckphase bei 10 bar auf 250 °C erhitzt. Nach dem Entspannen wurde die Temperatur während der 5-stündigen Entgasungsphase von 250 °C auf 295 °C erhöht. Das Polymerisat wurde als Strang abgezogen und granuliert.

Ergebnis:

| | |
|---|---|
| relative Lösungsviskosität: | 1,325 |
| $NH_2$-Endgruppen: | 82 µMol/g |
| COOH-Endgruppen: | 61 µMol/g |
| Schmelzviskosität (122,6 N/270 °C): | 1800 PA's |
| Glasübergangstemperatur: | 181 °C |

Beispiel 4:

In den Löser eines 20 l Autoklaven wurden folgende Edukte und Zusätze gegeben:
3,205 kg (13,44 Mol) "Diamin 1"
0,950 kg ( 1,66 Mol) "Dimersäure 1"
1,915 kg (11,53 Mol) Isophthalsäure
0,022 kg ( 0,14 Mol) 1-Amino-3-cyclohexyl-aminopropan
0,5 kg Wasser
0,005 kg Antischaummittel
Totales Verhältnis Amin/Säure: 1 : 1,013 (einschließlich Kettenlängenregler)
Das Gemisch wurde im Autoklaven während der 2-stündigen Druckphase bei 10 bar auf 250 °C erhitzt. Nach dem Entspannen wurde die Temperatur während der 5-stündigen Entgasungsphase von 250 °C auf 295 °C erhöht. Das Polymerisat wurde als Strang abgezogen und granuliert.

Ergebnis:

| | |
|---|---|
| relative Lösungsviskosität: | 1,338 |
| $NH_2$-Endgruppen: | 46 µMol/g |
| COOH-Endgruppen: | 37 µMol/g |
| Schmelzviskosität (122,6 N/270 °C): | 3717 PA's |
| Glasübergangstemperatur: | 205 °C |

## Tabelle 1: analytische Werte

| | Beispiel | Endgruppen $-NH_2$ [ Mol/g] | Endgruppen -COOH [µMol/g] | relative Lösungsviskosität | Schmelzviskosität 270 °C/122,6 N [Pa*s] |
|---|---|---|---|---|---|
| Vgl. | Nr. 1 | 83 | 16 | 1,430 | 4336 |
| Vgl. | Nr. 2 | 29 | 117 | 1,365 | 603 |
| Beispiel | Nr. 3 | 11 | 82 | 1,325 | 1800 |
| Beispiel | Nr. 4 | 46 | 37 | 1,338 | 3717 |

Vergleichsbeispiele:

| | | | |
|---|---|---|---|
| Nr. 5 | 17 | 33 | |
| Nr. 6 | 151 | 199 | 1,214 |
| Nr. 7 | 70 | 174 | 1,238 |
| Nr. 8 | 62 | 143 | 1,292 |
| Nr. 9 | 98 | 87 | 1,311 |

In den nachfolgenden Tabellen 3 bis 5 sind die Eigenschaften der hergestellten Copolyamide zusammengefaßt.

**Tabelle 2: Wasseraufnahme und Glasübergangstemperaturen**

**Die Tabelle zeigt die Abhängigkeit der Wasseraufnahme und die Änderung der Glastemperatur von Copolyamiden mit unterschiedlichen Anteilen an Dimersäure unter Berücksichtigung des Verhältnisses der $CH_2$-Gruppen**

| | Beispiel | Tg trocken | Tg Wasserlagerung | Tg Gleichgewichtswasser- | Gleichgewichtswasseraufnahme | Tg Gleichgewichtswasser- | Gleichgewichtswasseraufnahme |
|---|---|---|---|---|---|---|---|
| | | | 6 Tage 95°C | Luftfeuchte 100% | Luftfeuchte 100% | Luftfeuchte 50% | Luftfeuchte 50% |
| | | | | 23°C | 23°C | 23°C | 23°C |
| | | [°C] | [°C] | [°C] | [%] | [°C] | [%] |
| Vgl. | Nr. 1 | 158 | 128 | 134 | 1,6 | 151,5 | 0,7 |
| Vgl. | Nr. 2 | 161 | 130 | 140,5 | 1,7 | 151 | 0,8 |
| Beispiel | Nr. 3 | 181 | 149 | 151 | 2,3 | 163 | 1,1 |
| Beispiel | Nr. 4 | 203 | 139 | 165 | 3,9 | 183 | 1,4 |
| | Vergleichsbeispiel | | | | | | |
| | Nr. 5 | 114 | | | | | |
| | Nr. 6 | 82 | | | | | |
| | Nr. 7 | 98 | keine Formbeständigkeit | | | | |
| | Nr. 8 | 103 | | | | | |
| | Nr. 9 | 131 | | | | | |

Tabelle 3: Mechanische Eigenschaften

| Beispiel | Zug-E-Modul | Zug-E-Modul | Streckspannung | Streckspannung | Streckdehnung | Streckdehnung | Reißfestigkeit | Reißfestigkeit | Reißdehnung | Reißdehnung |
|---|---|---|---|---|---|---|---|---|---|---|
| | tr. | kond. | tr. | kond. | tr. | kond. | tr. | kond. | tr. | kond. |
| | [N/mm$^2$] | [N/mm$^2$] | [N/mm$^2$] | [N/mm$^2$] | [%] | [%] | [N/mm$^2$] | [N/mm$^2$] | [%] | [%] |
| Vgl. Nr. 1 | 2130 | 1920 | 74 | 71 | 11 | 10 | 54 | 51 | 38 | 32 |
| Vgl. Nr. 2 | 1930 | 1925 | 73 | 69 | 11 | 9 | 55 | 52 | 29 | 28 |
| Nr. 3 | 2190 | | | | | | 49 | | 4 | |
| Nr. 4 | 2260 | | | | | | 82,5 | | 18,3 | |

Tabelle 4

| Mechanische Eigenschaften | | | | |
|---|---|---|---|---|
| Beispiel | Kerbschlagzähigkeit tr. [kJ/m$^1$] | Kerbschlagzähigkeit kond. [kJ/m$^1$] | Schlagzähigkeit tr. [kJ/m$^1$] | Schlagzähigkeit kond. [kJ/m$^1$] |
| Vgl.Nr. 1 | 4,0 | 3,5 | ohne Bruch | ohne Bruch |
| Vgl.Nr. 2 | 1,4 | 2,4 | 80% o.B | 80% o.B. |
| Nr. 3 | | | | |
| Nr. 4 | 0,7 | 0,6 | | 35,3 |

## Patentansprüche

1. Amorphes Copolyamid, aus

a) 50 Mol-% wenigstens eines cycloaliphathischen Diamins der Formel I,

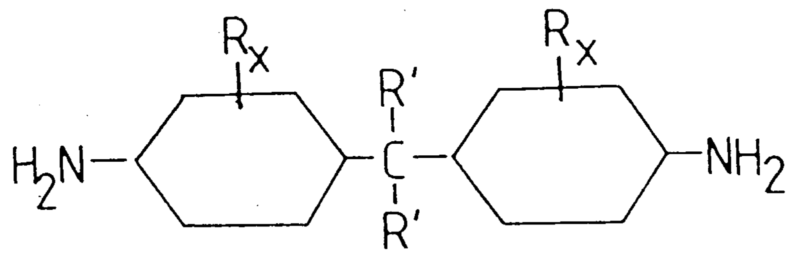

worin R einen Alkylrest mit 1 bis 10 Kohlenstoffatomen steht, R' Wasserstoff oder einen Alkylrest mit 1 bis 4 Kohlenstoffatomen bedeutet und x 0 bis 4 ist,

b) 5 bis 12 Mol-% einer dimerisierten Fettsäure, und

c) 38 bis 45 Mol-% einer aromatischen Dicarbonsäure

wobei sich die Molsummen der Komponenten a) bis c) zu 100% ergänzen, und wahlweise aus

d) 0 bis 50 Mol-% auf Basis der Summe von a), b) und c) weiteren polyamidbildenden Monomeren.

2. Copolyamid nach Anspruch 1, dadurch gekennzeichnet, daß es übliche einsatzbedingte Additive enthält.

3. Copolyamid gemäß einem der vorhergehenden Ansprüche, dadurch gekennzeichnet, daß das cycloaliphatische Diamin aus 3,3'-Dimethyl-4,4'-diaminodicyclohexylmethan, 4,4'-Diaminodicyclohexylmethan und/oder 4,4'-Diaminodicyclohexylpropan besteht.

4. Copolyamid nach einem der vorhergehenden Ansprüche, dadurch gekennzeichnet, daß die dimerisierte Fettsäure auf eine langkettige ungesättigte Fettsäure, insbesondere eine Fettsäure mit 18 Kohlenstoffatomen, zurückgeht.

5. Copolyamid gemäß einem der vorhergehenden Ansprüche, dadurch gekennzeichnet, daß die dimerisierte Fettsäure einen Dimeranteil von mindestens 90 Gew.-%, insbesondere von mindestens 97 Gew.-%, besitzt.

6. Copolyamid gemäß einem der vorhergehenden Ansprüche, dadurch gekennzeichnet, daß die aromatische Dicarbonsäure aus Isophthalsäure oder Terephthalsäure oder aus einem Gemisch dieser Säuren, das insbesondere mindestens 25 Mol-% Isophthalsäure enthält, besteht.

7. Copolyamid nach einem der vorhergehenden Ansprüche, dadurch gekennzeichnet, daß weitere polyamidbildende Monomere d) aus aliphatischen Diaminen mit 2 bis 20 Kohlenstoffatomen, aromatisch-aliphatischen Diaminen mit 6 bis 12 Kohlenstoffatomen, aliphatischen Dicarbonsäuren mit 6 bis 20

Kohlenstoffatomen sowie Aminosäuren und Lactamen mit 4 bis 14 Kohlenstoffatomen bestehen.

**8.** Copolyamid gemäß einem der vorhergehenden Ansprüche, dadurch gekennzeichnet, daß das polyamidbildende Monomere aus m-Xylidendiamin besteht.

**9.** Verfahren zur Herstellung von Copolyamiden gemäß einem der vorhergehenden Ansprüche, dadurch gekennzeichnet, daß in einer ersten Stufe unter Wasserdampfatmosphäre und unter einem Druck von 2 bis 30 bar bei einer Temperatur von 200°C bis 280°C eine Vorkondensation durchgeführt und die Schmelze nach Entspannen unter Rühren und unter einer Inertgasatmosphäre bei Normaldruck oder Vakuum bei einer Temperatur von ungefähr 240°C bis 320°C soweit kondensiert wird, daß die Endgruppensumme unter 300 µÄq Endgruppen pro Gramm des Polymeren absinkt.

**10.** Verwendung eines Copolyamids gemäß einem der vorhergehenden Ansprüche zur Herstellung von Formteilen mit hoher Steifigkeit und Schlagzähigkeit sowie einer geringen Feuchtigkeitsaufnahme.

## Claims

**1.** Amorphous copolyamide of

a) 50 mol% of at least one cycloaliphatic diamine of Formula I

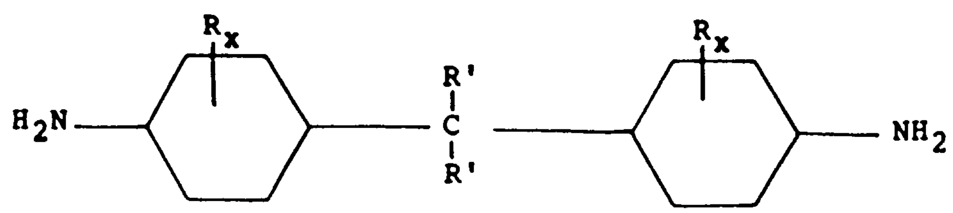

I

wherein R represents an alkyl radical containing from 1 to 10 carbon atoms, R' represents hydrogen or an alkyl radical containing 1 to 4 carbon atoms and x is 0 to 4,

b) 5 to 12 mol% of a dimerised fatty acid, and

c) 38 to 45 mol% of an aromatic dicarboxylic acid

wherein the molar sum of components a) to c) adds up to 100%, and optionally of

d ) 0 to 50 mol%, based on the sum of a), b) and c), of further polyamide-forming monomers.

**2.** Copolyamide according to claim 1, characterised in that it contains conventional additives for the specific use.

**3.** Copolyamide according to one of the preceding claims, characterised in that the cycloaliphatic diamine comprises 3,3'-dimethyl-4,4'-diaminodicyclohexylmethane, 4,4'-diaminodicyclohexylmethane and/or 4,4'-diaminodicyclohexylpropane.

**4.** Copolyamide according to one of the preceding claims, characterised in that the dimerised fatty acid is derived from a long-chain unsaturated fatty acid, in particular a fatty acid containing 18 carbon atoms.

**5.** Copolyamide according to one of the preceding claims, characterised in that the dimerised fatty acid has a dimer content of at least 90% by weight, in particular of at least 97% by weight.

**6.** Copolyamide according to one of the preceding claims, characterised in that the aromatic dicarboxylic acid comprises isophthalic acid or terephthalic acid or of a mixture of these acids which contains, in particular, at least 25 mol% of isophthalic acid.

**7.** Copolyamide according to one of the preceding claims, characterised in that further polyamide-forming monomers d) comprise aliphatic diamines containing from 2 to 20 carbon atoms, aromatic/aliphatic diamines containing from 6 to 12 carbon atoms, aliphatic dicarboxylic acids containing from 6 to 20 carbon atoms as well as amino acids and lactams containing from 4 to 14 carbon atoms.

8. Copolyamide according to one of the preceding claims, characterised in that the polyamide-forming monomer comprises m-xylidenediamine.

9. Process for producing copolyamides according to one of the preceding claims, characterised in that precondensation is carried out in a first stage in a steam atmosphere and at a pressure of 2 to 30 bar at a temperature of 200 °C to 280 °C, and, after release of the pressure, the melt is condensed with stirring and in an inert gas atmosphere under normal pressure or vacuum at a temperature of about 240 °C to 320 °C until the sum of terminal groups drops below 300 µeq terminal groups per gram of the polymer.

10. Use of a copolyamide according to one of the preceding claims for producing shaped articles with high rigidity and impact resistance and a low moisture absorption capacity.

**Revendications**

1. Copolyamide amorphe constitué de
   a) 50 % en moles d'au moins une diamine cycloaliphatique de formule I

(I) 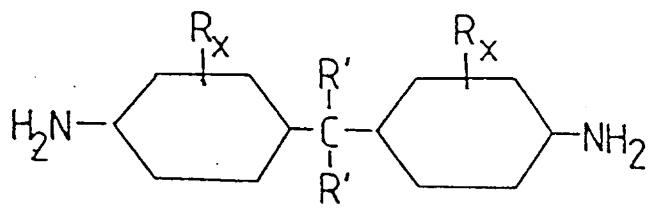

   dans laquelle R représente un résidu alkyle comportant de 1 à 10 atomes de carbone, R' représente un atome d'hydrogène ou un résidu alkyle comportant de 1 à 4 atomes de carbone et x est comprise entre 0 et 4,
   b) de 5 à 12 % en moles d'un acide gras dimère, et
   c) de 38 à 45 % en moles d'un acide dicarboxylique aromatique

   les sommes en moles des composants a) à c) se complétant à 100 %, et, facultativement, de
   d) de 0 à 50 % en moles, par rapport à la somme de a), b) et c), d'autres monomères formant des polyamides.

2. Copolyamide conforme à la revendication 1, caractérisé en ce qu'il contient, en fonctions des applications prévues, des additifs habituels.

3. Copolyamide conforme à une des revendications précédentes, caractérisé en ce que la diamine cycloaliphatique est le 3,3'-diméthyl-4,4'-diaminodicyclohexylméthane, le 4,4'-diaminodicyclohexylméthane et/ou le 4,4'-diaminodicyclohexylpropane.

4. Copolyamide conforme à une des revendications précédentes, caractérisé en ce que l'acide gras dimère est dérivé d'un acide gras insaturé à longue chaîne, en particulier d'un acide gras comportant 18 atomes de carbone.

5. Copolyamide conforme à une des revendications précédentes, caractérisé en ce que l'acide gras dimère à une teneur en dimères au moins égale à 90 % en poids, en particulier au moins égal à 97 % en poids.

6. Copolyamide conforme à une des revendications précédentes, caractérisé en ce que l'acide dicarboxylique aromatique est l'acide isophtalique ou l'acide téréphtalique ou un mélange de ces acides contenant au moins 25 % en moles d'acide isophtalique.

7. Copolyamide conforme à une des revendications précédentes, caractérisé en ce que les autres monomères formant des polyamides d) sont des diamines aliphatiques comportant de 2 à 20 atomes de carbone, des diamines aromatiques-aliphatiques comportant de 6 à 12 atomes de carbone, des acides dicarboxyliques aliphatiques comportant de 6 à 20 atomes de carbone, ainsi que des acides

aminés et des lactames comportant de 4 à 14 atomes de carbone.

8. Copolyamide conforme à une des revendications précédentes, caractérisé en ce que le monomère formant des polyamides est la m-xylidènediamine.

9. Procédé de préparation de copolyamides conformes à une des revendications précédentes, caractérisé en ce que l'on réalise, dans une première étape, une précondensation dans une atmosphère de vapeur d'eau et sous une pression de 2 à 30 bars et à une température de 200 °C à 280 °C, et que l'on condense la masse fondue, après détente, sous agitation et dans une atmosphère de gaz inerte à pression normale ou sous vide, à une température d'environ 240 °C à 320 °C, jusqu'à ce que la somme des groupements terminaux soit inférieure à 300 microéquivalents par gramme de ce polymère.

10. Utilisation d'un copolyamide conforme à une des revendications précédentes pour la préparation de pièces moulés ayant une rigidité et une résilience élevées et absorbant faiblement l'humidité.